# EUROPÄISCHE PATENTANMELDUNG

(11) **EP 4 311 459 A1**
(43) Veröffentlichungstag der Anmeldung: **31.01.2024**
(21) Anmeldenummer: 23186810.0
(22) Anmeldetag: 20.07.2023
(51) Int. Cl.: A47J 31/52, A47J 31/42

(54) **VERFAHREN ZUM BENUTZERGESTEUERTEN ERMITTELN EINES BRÜHPARAMETERS FÜR KAFFEEBOHNEN ZUM ZUBEREITEN EINES KAFFEEGETRÄNKS MITTELS EINES KAFFEEAUTOMATEN**

(30) Priorität: 28.07.2022 DE 102022207809
(71) Anmelder: BSH Hausgeräte GmbH, 81739 München (DE)
(72) Erfinder: Frank, Theresa, 83236 Übersee (DE); Mirbeth, Sebastian, 83374 Traunwalchen (DE); Pelz, Sebastian, 85737 Ismaning (DE); Graule, Maria, 73433 Aalen (DE)

(57) **Zusammenfassung**

Die vorliegende Erfindung betrifft ein Verfahren zum benutzergesteuerten Ermitteln eines Brühparameters (P) für Kaffeebohnen (3) zum Zubereiten eines Kaffeegetränks mittels eines Kaffeeautomaten (1), welcher zumindest einen Behälter (2) zum Bevorraten von einer Sorte von Kaffeebohnen (3) aufweist.

Eine verbesserte und nachvollziehbare Zubereitung von Kaffeegetränken mit einem verbesserten Geschmackserlebnis durch den Benutzer werden dadurch erreicht, dass die Kaffeebohnen (3) Gruppen (G) zugeordnet werden, wobei für die jeweilige Gruppe (G) zumindest ein zugehöriger Brühparameter (P) hinterlegt wird. Die bevorrateten Sorten von Kaffeebohnen (3) werden dem Benutzer zur Auswahl angeboten, wobei je nach Auswahl durch den Benutzer zumindest einer aus der zugehörigen Gruppe (G) stammender Brühparameter (P) dem Benutzer mitgeteilt und das Kaffeegetränk mit aus der ausgewählten Sorte der Kaffeebohnen (3) erzeugtem Kaffeepulver zubereitet wird.

Die Erfindung betrifft des Weiteren einen derart betriebenen Kaffeeautomaten (1) und ein dementsprechendes Computerprogrammprodukt.

## Beschreibung

Die vorliegende Erfindung betrifft ein Verfahren zum benutzergesteuerten Ermitteln eines Brühparameters für Kaffeebohnen zum Zubereiten eines Kaffeegetränks mittels eines Kaffeeautomaten. Die Erfindung betrifft ferner einen Kaffeeautomaten, welcher derart betrieben ist und ein dementsprechendes Computerprogrammprodukt.

Aus der EP 2 279 683 A1 ist ein Verfahren zum benutzergesteuerten Herstellen eines insbesondere flüssigen Lebensmittelprodukts bekannt, bei dem aus einem Vorstufenprodukt durch einen Automaten gustatorisch, olfaktorisch und/oder haptisch wahrnehmbare Genusssubstanzen extrahiert und in das Lebensmittelprodukt überführt werden. Dabei wird über eine benutzergesteuerte Einstellung von mindestens zwei technischen Parametern des Automaten auf das Extrahieren der Genusssubstanzen Einfluss genommen, um eine gewünschte Qualität des Lebensmittelprodukts herstellen zu können. Eine Einstellung von hierzu erforderlichen technischen Parametern erfolgt durch eine benutzergesteuerte elektronische Übersetzungsschaltung, welche ausgehend von Benutzern gewählten Werten der humansensorischen Attribute und auf Basis eines im Voraus ermittelten Sensorikprofils des Vorstufenprodukts die technischen Parameter bei der Herstellung steuert. Hierdurch soll ein gewünschter Geschmack, Geruch oder eine gewünschte Beschaffenheit des Lebensmittelprodukts exakter einstellbar sein.

Aus der WO 622/003743 A1 ist eine automatische Kaffeemaschine zur Zubereitung von Kaffeegetränken durch Aufgießen von Kaffeepulver bekannt, die eine Steuer- und Kontrolleinrichtung aufweist, die derart konfiguriert ist, dass sie mindestens einen Betriebsparameter eines Voraufgussschrittes anpasst und diesen auswählt aus: Einem Durchsatz des Voraufgusswassers, einer Menge des Voraufgusswassers und einer Dauer der Pause am Ende des Voraufgussschrittes und dies in Abhängigkeit von einer Granulometrie des Kaffeepulvers.

Denkbar ist es, in einem Kaffeeautomaten einem Benutzer verschiedene Brühparameter zur Auswahl anzubieten. Somit hat der Benutzer die Möglichkeit, durch Versuche eine Anpassung der Brühparameter vorzunehmen und/oder diese manuell anzupassen. Die Einstellung von gewünschten und/oder optimalen Brühparametern Bedarf dabei in der Regel mehrerer Versuche in der Art von Trial-and-Error. Zudem ist der Benutzer zum manuellen Einstellen der gewünschten Brühparameter beim Wechsel der verwendeten Kaffeebohnen zum Wiederholen der Trial-and-Error Versuche veranlasst.

Die vorliegende Erfindung beschäftigt sich mit der Aufgabe, für ein Verfahren zum benutzergesteuerten Ermitteln zumindest eines Brühparameters für Kaffeebohnen sowie für einen derart betriebenen Kaffeeautomaten verbesserte oder zumindest andere Ausführungsformen anzugeben, welche insbesondere Nachteile aus dem Stand der Technik beseitigt. Insbesondere beschäftigt sich die vorliegende Erfindung mit der Aufgabe, für das Verfahren sowie für den Kaffeeautomaten verbesserte oder zumindest andere Ausführungsformen anzugeben, die sich durch eine verbesserte und nachvollziehbare Zubereitung von Kaffeegetränken mit einem verbesserten Geschmackserlebnis für den Benutzer auszeichnen.

Diese Aufgabe wird erfindungsgemäß durch die Gegenstände der unabhängigen Patentansprüche gelöst. Vorteilhafte Ausführungsformen sind Gegenstand der abhängigen Ansprüche.

Die vorliegende Erfindung beruht demnach auf dem allgemeinen Gedanken, einem Benutzer abhängig von der vom Benutzer ausgewählten Sorte von Kaffeebohnen optimierte Brühparameter mitzuteilen. Somit entfällt für den Benutzer der Aufwand, optimierte Brühparameter durch eigene Versuche herauszufinden und diese Versuche beim Verwenden unterschiedlicher Kaffeesorten jeweils zu wiederholen. In der Folge kommt es zu einem für den Benutzer erhöhten Komfort mit einer nachvollziehbaren Zubereitung des gewünschten Kaffeegetränks mit der ausgewählten Sorte von Kaffeebohnen. Die Mitteilung der Brühparameter an den Benutzer führt ferner dazu, dass der Benutzer den Brühvorgang und somit die Zubereitung des Kaffeegetränks verbessert nachvollziehen kann, sodass ein verbessertes Geschmackserlebnis gegeben ist. Insbesondere können durch die Zuordnung von Brühparameter und Aromen sowie Geschmacksnoten die Wahrnehmung besagter Aromen und Geschmacksnoten durch den Benutzer verstärkt und intensiviert werden.

Dem Erfindungsgedanken entsprechend wird beim Verfahren zum benutzergesteuerten Ermitteln eines Brühparameters für Kaffeebohnen zum Zubereiten eines Kaffeegetränks mittels eines Kaffeeautomaten dem Benutzer zunächst die Auswahl einer Sorte von Kaffeebohnen angeboten. Der Kaffeeautomat weist zu diesem Zweck vorzugsweise zumindest einen Behälter auf, in welchen jeweils eine Sorte von Kaffeebohnen bevorratet werden kann. Das heißt, dass dem Benutzer die in dem zumindest einen Behälter bevorrateten Kaffeebohnen zur Auswahl angeboten werden. Dabei werden zuvor Sorten von Kaffeebohnen jeweils einer Gruppe zugeordnet. Unterschiedliche Sorten von Kaffeebohnen können also unterschiedlichen Gruppen zugeordnet sein. Für die jeweilige Gruppe ist zumindest ein zugehöriger Brühparameter, vorzugsweise zwei oder mehr zugehörige Brühparameter, hinterlegt. Nach Auswahl der Sorte von Kaffeebohnen durch den Benutzer wird zumindest ein der zugehörigen Gruppe zugehöriger Brühparameter dem Benutzer mitgeteilt und das Kaffeegetränk mit aus der ausgewählten Sorte der Kaffeebohnen erzeugtem Kaffeepulver zubereitet. Mit anderen Worten, wählt der Benutzer eine Sorte von Kaffeebohnen aus, so wird dem Benutzer zumindest ein Brühparameter aus der der ausgewählten Sorte von Kaffeebohnen zugehörigen Gruppe mitgeteilt und das Kaffeegetränk mit aus der ausgewählten Sorte der Kaffeebohnen erzeugtem Kaffeepulver zubereitet.

Die erfindungsgemäße Idee ordnet unterschiedliche Sorten von Kaffeebohnen jeweils einer Gruppe zu. Für die jeweilige Gruppe sind optimierte Brühparameter hinterlegt. Nach Auswahl der entsprechenden Sorte von Kaffeebohnen wird dem Benutzer zumindest ein Brühparameter aus der Gruppe, welcher die Sorte von Kaffeebohnen zugeordnet ist, mitgeteilt.

Vorzugsweise sind für die jeweilige Gruppe zwei oder mehr Brühparameter hinterlegt.

Vorzugsweise werden dem Benutzer zwei oder mehr Brühparameter aus der zugehörigen Gruppe mitgeteilt.

Prinzipiell kann zumindest einer der Brühparameter ausschließlich von der Sorte der Kaffeebohnen abhängig sein.

Vorzugsweise sind die Brühparameter auch von dem jeweiligen, zuzubereitenden Kaffeegetränk abhängig. Das heißt, dass für dieselbe Sorte von Kaffeebohnen für verschiedene Kaffeegetränken unterschiedliche Brühparameter hinterlegt sein und dem Benutzer mitgeteilt werden können.

Die Mitteilung des zumindest einen Brühparameters an den Benutzer kann auf beliebige Weise zum Zubereiten des Kaffeegetränks eingesetzt werden.

Das Anbieten der Auswahl einer Sorte von Kaffeebohnen kann auf beliebige Weise erfolgen.

Beispielsweise kann die Auswahl einer Sorte von Kaffeebohnen aus einer Liste an verschiedenen Sorten von Kaffeebohnen angeboten werden.

Der Kaffeeautomat kann lediglich einen Behälter aufweisen.

Vorstellbar ist es auch, dass der Kaffeeautomat zwei oder mehr Behälter aufweist, in denen jeweils eine Sorte von Kaffeebohnen bevorratet wird. Dabei werden vorteilhaft die in den Behältern bevorrateten Kaffeesorten dem Benutzer zur Auswahl angeboten.

Vorteilhaft wird zumindest einer der wenigstens einen Brühparameter dem Benutzer mitgeteilt sowie zur manuellen Auswahl angeboten und das Kaffeegetränk mit dem zumindest einen manuell ausgewählten Brühparameter zubereitet. Der Benutzer hat also die Möglichkeit, zumindest einen Brühparameter manuell auszuwählen und/oder einzustellen, wobei die Mitteilung des Brühparameters eine Empfehlung an den Benutzer darstellt, welcher der Benutzer folgen kann. Daraufhin erfolgt die Zubereitung des Kaffeegetränks mit dem entsprechenden zumindest einen manuell durch den Benutzer ausgewählten Brühparameter.

Vorteilhaft wird alternativ oder zusätzlich zumindest einer der wenigstens einen Brühparameter dem Benutzer mitgeteilt und das Kaffeegetränk mit dem zumindest einen mitgeteilten Brühparameter zubereitet. Bei dieser Variante wird der Benutzer also über den zumindest einen Brühparameter informiert und die Zubereitung des Kaffeegetränks mit dem zumindest einen mitgeteilten Brühparameter durchgeführt.

Bei vorteilhaften Varianten wird mit zumindest einem der mitgeteilten Brühparameter eine durch diesen Brühparameter erzielte optimierte Aromaerzeugung und/oder Geschmacksnotenerzeugung dem Benutzer mitgeteilt. Das heißt, dass dem Benutzer mitgeteilt wird, dass durch den mitgeteilten Brühparameter beispielsweise eine Fruchtnote, eine Schokoladennote, eine Karamellnote und dergleichen erzielt wird. Somit wird das Geschmackserlebnis des Benutzers verbessert. Darüber hinaus wird der Benutzer auf diese Weise in die Lage versetzt, sein Wissen über den Zusammenhang zwischen Brühparameter und den entsprechenden Aromen und Geschmacksnoten zu verbessern.

Der jeweilige zumindest eine Brühparameter kann ein solcher beliebiger Art sein, dessen Änderung beim Brühvorgang zu unterschiedlichen Ergebnissen des Kaffeegetränks, insbesondere hinsichtlich Geschmack und Aromen, führt.

Bei bevorzugten Ausführungsformen wird als ein Brühparameter eine dem Kaffeegetränk zugehörige Kaffeestärke verwendet. Die Kaffeestärke ist die Menge des beim Brühvorgang für das Kaffeegetränk verwendeten Kaffeepulvers. Die Änderung der Kaffeestärke führt insbesondere zu einer Änderung der Intensität von Aromen und/oder Geschmacksnoten.

Vorteilhaft wird als ein Brühparameter eine dem Kaffeegetränk zugehörige Getränke-Menge verwendet. Die Getränkemenge ist die Zielmenge des gebrühten und somit zubereiteten Kaffeegetränks. Die Änderung der Getränke-Menge führt insbesondere zu einer entsprechenden Änderung der Intensität von Aromen und/oder Geschmacksnoten.

Als vorteilhaft gelten Ausführungsformen, bei welchen als ein Brühparameter ein Mahlgrad der Kaffeebohnen verwendet wird. Der Mahlgrad gibt den Feinanteil der Kaffeepartikel im Kaffeepulver an. Eine Variation des Mahlgrads, insbesondere des Feinanteils, führt dabei zu einer Änderung der Mahlgradverteilung und somit zu unterschiedlichen Aromen und/oder Geschmacksnoten im zubereiteten Kaffeegetränk.

Vorteilhaft wird als ein Brühparameter eine Kontaktdauer des zum Zubereiten des Kaffeegetränks verwendeten Wassers mit dem Kaffeepulver verwendet. Eine Variation der Kontaktdauer führt zu einer entsprechenden Änderung der Wechselwirkung zwischen dem Wasser und dem Kaffeepulver und somit insbesondere zu einer Variation der Aromen und/oder Geschmacksnoten im zubereiteten Kaffeegetränk. Die Kontaktdauer kann insbesondere durch eine Änderung der Flussgeschwindigkeit des Wassers angepasst werden.

Vorteilhaft sind Ausführungsformen, bei welchen als ein Brühparameter eine Brühtemperatur des zum Zubereiten des Kaffeegetränks verwendeten Wassers verwendet wird. Die Brühtemperatur ist die Zieltemperatur des Wassers während des Brühvorgangs.

Unterschiedliche Sorten von Kaffeebohnen unterscheiden sich insbesondere hinsichtlich der Sorte der Bohnen, das heißt insbesondere hinsichtlich der Zusammensetzung der Kaffeebohnen. Vorteilhaft sind dabei Ausführungsformen, bei welchen Kaffeebohnen abhängig von ihrer Zusammensetzung jeweils einer Gruppe zugeordnet werden. Die Zusammensetzung der Kaffeebohnen umfasst beispielsweise ihre molekulare Zusammensetzung und kann beispielsweise von der Bohnensorte, vom Anbaugebiet und von der Aufbereitung der Rohbohnen abhängigen.

Vorteilhaft unterscheiden sich verschiedene Sorten von Kaffeebohnen durch ihren Röstgrad. Das heißt, dass bei vorteilhaften Varianten die Kaffeebohnen abhängig von ihrem Röstgrad jeweils einer Gruppe zugeordnet werden. Beispiel hierfür sind eine helle Röstung und eine dunkle Röstung.

Zweckmäßig erfolgt vor der Zubereitung des Kaffeegetränks und dem Anbieten der Sorte der Kaffeebohnen zur Auswahl die Hinterlegung der entsprechenden Sorten der Kaffeebohnen. Dies kann beispielsweise ebenso benutzergesteuert, beispielsweise mittels eines Fragenkatalogs, erfolgen.

Das erfindungsgemäße Verfahren wird zweckmäßig in einem Kaffeeautomaten umgesetzt. Es versteht sich dabei, dass ein entsprechender Kaffeeautomat ebenfalls zum Umfang dieser Erfindung gehört.

Der Kaffeeautomat umfasst vorzugsweise zumindest einen Behälter zum Bevorraten von jeweils einer Sorte von Kaffeebohnen. Zudem umfasst der Kaffeeautomat eine Steuereinrichtung, welche derart ausgestaltet ist, dass sie das Verfahren durchführt.

Vorstellbar ist es, dass der Kaffeeautomat zwei oder mehr Behälter zum Bevorraten von jeweils einer Sorte von Kaffeebohnen aufweist.

Die Mitteilung des zumindest einen Brühparameters kann unmittelbar am Kaffeeautomat erfolgen. Zu diesem Zweck weist der Kaffeeautomat vorteilhaft eine Anzeigeeinrichtung, beispielsweise ein Display, auf, auf welcher der zumindest eine Brühparameter, vorzugsweise zudem die mit dem Brühparameter erzielte optimierte Aromaerzeugung und/oder Geschmacksnotenerzeugung, angezeigt wird. Auch kann die jeweilige Auswahl durch den Benutzer über die Anzeigeeinrichtung erfolgen. Zu diesem Zweck kann die Anzeigeeinrichtung berührungsempfindlich sein.

Ebenso ist es möglich, die Mitteilung der Brühparameter und/oder die jeweilige Auswahl über eine mobile Einrichtung, beispielsweise über ein Mobiltelefon, umzusetzen. Dabei bilden der Kaffeeautomat und die mobile Einrichtung eine Anordnung, in welcher der Kaffeeautomat und die mobile Einrichtung miteinander datenübertragend kommunizierend verbunden sind.

Vorstellbar ist es, dem Benutzer verschiedene Fragen zu seiner ausgewählten Sorte von Kaffeebohnen zu stellen und auf Basis der Antworten entsprechende Brühparameter zur Zubereitung des Kaffeegetränks zu verwenden, insbesondere mitzuteilen und/oder zur Auswahl anzubieten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch:
- Fig. 1: eine stark vereinfachte, schaltplanartige Darstellung eines Kaffeeautomaten,
- Fig. 2: eine Tabelle zur Erläuterung des erfindungsgemäßen Verfahrens,
- Fig. 3: ein Ablaufdiagramm des erfindungsgemäßen Verfahrens.

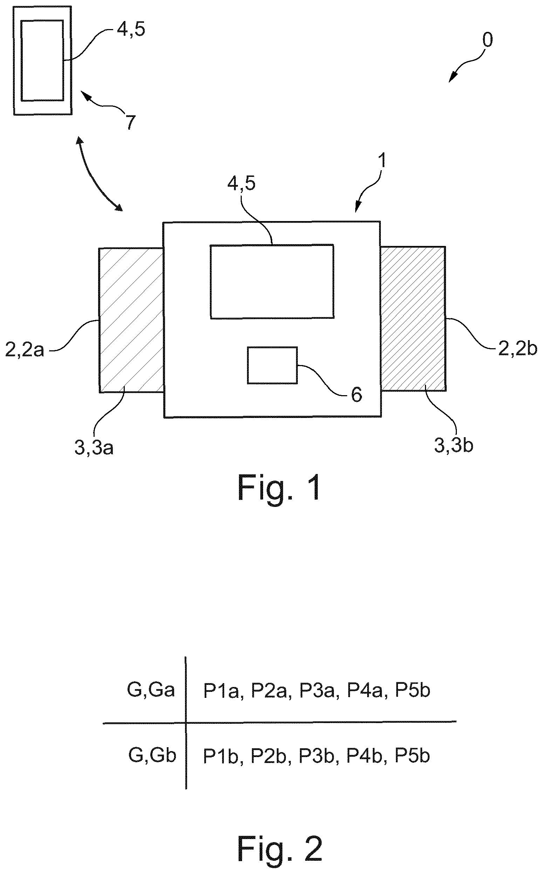

Ein in Figur 1 beispielhaft gezeigter Kaffeeautomat 1 umfasst zumindest einen Behälter 2 zum bevorratenden von Kaffeebohnen 3. In den gezeigten Ausführungsbeispielen weist der Kaffeeautomat 1 zwei solche Behälter 2 auf. In zumindest zwei der Behälter 2 können unterschiedliche Sorten von Kaffeebohnen 3 bevorratet sein. Die Behälter 2 sind jeweils nachfüllbar. Im gezeigten Ausführungsbeispiel weist der Kaffeeautomat 2 rein beispielhaft zwei Behälter 2, nämlich einen ersten Behälter 2, 2a und einen zweiten Behälter 2, 2b auf. In dem ersten Behälter 2, 2a ist eine erste Sorte von Kaffeebohnen 3, 3a und im zweiten Behälter 2, 2b eine zweite Sorte von Kaffeebohnen 3, 3b bevorratet. Der Kaffeeautomat 1 umfasst ferner eine Anzeigeeinrichtung 4, welche im gezeigten Ausführungsbeispiel als ein berührungsempfindliches Display 5 ausgestaltet ist. Der Kaffeeautomat 1 weist im gezeigten Ausführungsbeispiel ferner eine Steuereinrichtung 6 auf, welche zum Durchführen des nachfolgend beschriebenen Verfahrens ausgestaltet ist. Mit dem Kaffeeautomaten 1 wird aus den bevorrateten Kaffeebohnen 2 ein Kaffeegetränk zubereitet. Zu diesem Zweck wird aus den Kaffeebohnen 2 Kaffeepulver (nicht gezeigt) erzeugt und der Kaffeepulver zur Zubereitung des Kaffeegetränks gebrüht. Der Kaffeeautomat 1 kann unterschiedliche Kaffeegetränke aus den Kaffeebohnen 2 zubereiten.

Die in den Behältern 2 bevorrateten Sorten der Kaffeebohnen 3 sind bekannt, insbesondere hinterlegt. Dies kann benutzergesteuerte erfolgen. Die unterschiedlichen Sorten der Kaffeebohnen 2 werden dabei jeweils einer Gruppe G zugeordnet. Im gezeigten Ausführungsbeispiel wird dabei die erste Sorte der Kaffeebohnen 3, 3a einer ersten Gruppe Ga und die zweite Sorte der Kaffeebohnen 3, 3b einer zweiten Gruppe Gb zugeordnet. Ferner ist für die jeweilige Gruppe G zumindest ein Brühparameter P hinterlegt. In den gezeigten Ausführungsbeispielen sind rein beispielhaft für die jeweilige Gruppe G fünf Brühparameter P, nämlich ein erster Brühparameter P1, ein zweiter Brühparameter P2, ein dritter Parameter P3, ein vierter Brühparameter P4 sowie ein fünfter Parameter P5, hinterlegt sind. Somit sind für die erste Gruppe Ga ein zugehöriger erster Brühparameter P1a, ein zugehöriger zweiter Brühparameter P2a, ein zugehöriger dritter Brühparameter P3a, ein zugehöriger vierter Brühparameter P4a und ein zugehöriger fünfter Brühparameter P5a hinterlegt. Analog hierzu sind für die zweite Gruppe Gb ein zugehöriger erster Brühparameter P1b, ein zugehöriger zweiter Brühparameter P2b, ein zugehöriger dritter Brühparameter P3b, ein zugehöriger vierter Brühparameter P4b und ein zugehöriger fünfter Brühparameter P5b hinterlegt. In den gezeigten Ausführungsbeispielen handelt es sich beim ersten Brühparameter P1 um die Kaffeestärke, also die Menge des verwendeten Kaffeepulvers, beim zweiten Brühparameter P2 um die Getränke-Menge, also die Zielmenge des zubereiteten Kaffeegetränks, beim dritten Brühparameter P3 um den Mahlgrad, also um den Feinanteil der Kaffeepartikel im Kaffeepulver, beim vierten Parameter P4 um die Kontaktdauer, also die Dauer, welche das zum Brühen verwendete Wasser mit dem Kaffeepulver in Kontakt ist, und beim fünften Parameter P5 um die Brühtemperatur, also die Zieltemperatur des Wassers während des Brühvorgangs.

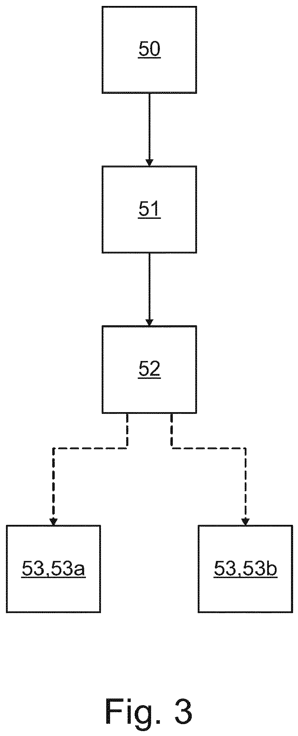

Gemäß des anhand des Ablaufdiagramms der Figur 3 erläuterten erfindungsgemäßen Verfahrens zum benutzergesteuerten Ermitteln eines Brühparameters P werden in einer Verfahrensmaßnahme 50 einem nicht gezeigten Benutzer die Sorten von Kaffeebohnen 3 zur Auswahl angeboten. Dies erfolgt beispielsweise mittels der Anzeigeeinrichtung 4. Diese Maßnahme 50 wird nachfolgend auch als Auswahlmaßnahme 50 bezeichnet. Der Benutzer hat nun die Möglichkeit, aus den angebotenen Sorten der Kaffeebohnen 3 eine Sorte auszuwählen. Auch dies erfolgt beispielsweise mittels der Anzeigeeinrichtung 4. Hat der Benutzer die Auswahl der Kaffeebohnen 3 getroffen, so wird in einer nachfolgenden Verfahrensmaßnahme 51 in der Gruppe G, welcher die Sorte der Kaffeebohnen 3 zugeordnet ist, zumindest ein Brühparameter P abgerufen (siehe Figur 2) und dem Benutzer in einer nachfolgenden Verfahrensmaßnahme 52 mitgeteilt. Die Verfahrensmaßnahme 51 wird nachfolgend auch als Gruppenmaßnahme 51 und die Verfahrensmaßnahme 52 als Mitteilungsmaßnahme 52 bezeichnet. Die Mitteilungsmaßnahme 52 kann das visuelle Hervorheben der Brühparameter P umfassen und somit deutlich machen, dass die Brühparameter P empfohlen werden. Anschließend erfolgt in einer Verfahrensmaßnahme 53 die Zubereitung des Kaffeegetränks. Die Verfahrensmaßnahme 53 wird nachfolgend auch als Zubereitungsmaßnahme 53 bezeichnet. Wie in Figur 3 mit gestrichelten Linien angedeutet ist, können ausgehend von der Mitteilungsmaßnahme 53 zwei unterschiedliche Zubereitungsmaßnahmen 53, nämlich eine erste Zubereitungsmaßnahme 53a und eine zweite Zubereitungsmaßnahme 53b erfolgen. Bei der ersten Zubereitungsmaßnahme 53a werden die mitgeteilten Brühparameter P dem Benutzer zur manuellen Auswahl und gegebenenfalls Änderung angeboten und das Kaffeegetränk mit den manuell ausgewählten Brühparameter P zubereitet. Bei der ersten Zubereitungsmaßnahme 53a werden dem Benutzer also die Brühparameter P empfohlen. Der Benutzer kann die empfohlenen Brühparameter P alle auswählen und somit übernehmen. Alternativ kann der Benutzer zumindest einen der Brühparameter abzulehnen bzw. zu ändern. Bei der zweiten Zubereitungsmaßnahme 53b erfolgt die Mitteilung der Brühparameter P lediglich zur Information, sodass das Kaffeegetränk mit den dem Benutzer mitgeteilten Brühparameter P zubereitet wird. Bei der ersten Zubereitungsmaßnahme 53a wählt der Benutzer also zumindest einen Brühparameter manuell und aktiv aus, wohingegen in der zweiten Zubereitungsmaßnahme 53b dem Benutzer keine solche Auswahl angeboten wird.

In einem vereinfachten Beispiel wird davon ausgegangen, dass sich die Kaffeebohnen 3 hinsichtlich ihrer Röstgrade voneinander unterscheiden. Beispielsweise hat die erste Sorte Kaffeebohnen 3, 3a eine helle Röstung als die zweite Sorte von Kaffeebohnen 3, 3b eine dunkle Röstung. Um bei der ersten Sorte von Kaffeebohnen 3, 3a mit der helleren Röstung eine optimale Zubereitung des Kaffeegetränks und somit Extraktion zu erreichen, sollte der Brühvorgang intensiviert werden. Dies wird beispielsweise durch eine höhere Brühtemperatur und/oder eine längere Kontaktdauer erreicht. Um bei der zweiten Sorte von Kaffeebohnen 3, 3b mit der dunkleren Röstung eine optimale Zubereitung des Kaffeegetränks und somit Extraktion zu erreichen, sollte der Brühvorgang weniger intensiv durchgeführt werden. Dies wird beispielsweise durch eine niedrigere Brühtemperatur und/oder eine kürzere Kontaktdauer erreicht.

Wie in Figur 1 dargestellt, kann die Mitteilung der Brühparameter P an den Benutzer und/oder die jeweilige Auswahl durch den Benutzer mittels eines Mobiltelefons 7 erfolgen. Dies erfolgt vorzugsweise mittels eines berührungsempfindlichen Displays 5 des Mobiltelefons 7. Dabei sind das Mobiltelefon 7 und der Kaffeeautomat 1 Bestandteil einer Anordnung 0, in welcher das Mobiltelefon 7 und der Kaffeeautomat 1 miteinander, wie mit einem Doppelpfeil angedeutet, Daten austauschen.

Dem Benutzer können, insbesondere mittels der Anzeigeeinrichtung 4 bzw. des Displays 5, Fragen zur ausgewählten Sorte der Kaffeebohnen 3 gestellt und anhand der Antworten des Benutzers entsprechende Brühparameter P mitgeteilt werden.

**Bezugszeichen**

| | |
|---|---|
| 1 | Kaffeeautomat |
| 2, 2a, 2b | Behälter |
| 3, 3a, 3b | Kaffeebohnen |
| 4 | Anzeigeeinrichtung |
| 5 | Display |
| 6 | Steuereinrichtung |
| 7 | Mobiltelefon |
| | |
| 50 | Auswahlmaßnahme |
| 51 | Gruppenmaßnahme |
| 53 | Mitteilungsmaßnahme |
| 54, 54a, 54b | Zubereitungsmaßnahme |
| | |
| G, Ga, Gb | Gruppe |
| P, P1, P2, P3, P4, P5, P1a, P2a, P3a, P4a, P5a, P1b, P2b, P3b, P4b, P5b | Brühparameter |

## Patentansprüche

1. Verfahren zum benutzergesteuerten Ermitteln eines Brühparameters (P) für Kaffeebohnen (3) zum Zubereiten eines Kaffeegetränks mittels eines Kaffeeautomaten (1), welcher zumindest einen Behälter (2) zum Bevorraten von jeweils einer Sorte von Kaffeebohnen (3) aufweist; wobei Sorten von Kaffeebohnen (3) jeweils einer Gruppe (G) zugeordnet und für die jeweilige Gruppe (G) zumindest ein zugehöriger Brühparameter (P) hinterlegt wird; wobei dem Benutzer die in den Behältern (2) bevorrateten Sorten Kaffeebohnen (3) zur Auswahl angeboten werden; wobei nach Auswahl der Sorte von Kaffeebohnen (3) durch den Benutzer zumindest ein der zugehörigen Gruppe (G) zugehöriger Brühparameter (P) dem Benutzer mitgeteilt und das Kaffeegetränk mit aus der ausgewählten Sorte der Kaffeebohnen (3) erzeugtem Kaffeepulver zubereitet wird.

2. Verfahren nach Anspruch 1, **dadurch gekennzeichnet, dass** zumindest einer der wenigstens einen Brühparameter (P) dem Benutzer zur manuellen Auswahl angeboten und das Kaffeegetränk mit dem zumindest einen manuell ausgewählten Brühparameter (P) zubereitet wird.

3. Verfahren nach Anspruch 1, **dadurch gekennzeichnet, dass** zumindest einer der wenigstens einen Brühparameter (P) dem Benutzer mitgeteilt und das Kaffeegetränk mit dem zumindest einen mitgeteilten Brühparameter (P) zubereitet wird.

4. Verfahren nach einem der Ansprüche 1 bis 3, **dadurch gekennzeichnet, dass** als ein Brühparameter (P) eine dem Kaffeegetränk zugehörige Kaffeestärke verwendet wird.

5. Verfahren nach einem der Ansprüche 1 bis 4, **dadurch gekennzeichnet, dass** als ein Brühparameter (P) eine dem Kaffeegetränk zugehörige Getränke-Menge verwendet wird.

6. Verfahren nach einem der Ansprüche 1 bis 5, **dadurch gekennzeichnet, dass** als ein Brühparameter (P) ein Mahlgrad des Kaffeepulvers verwendet wird.

7. Verfahren nach einem der Ansprüche 1 bis 6, **dadurch gekennzeichnet, dass** als ein Brühparameter (P) eine Kontaktdauer des zum Zubereiten des Kaffeegetränks verwendeten Wassers mit dem Kaffeepulver verwendet wird.

8. Verfahren nach einem der Ansprüche 1 bis 7, **dadurch gekennzeichnet, dass** als ein Brühparameter (P) eine Brühtemperatur des zum Zubereiten des Kaffeegetränks verwendeten Wassers verwendet wird.

9. Verfahren nach Anspruch 1 oder 2, **dadurch gekennzeichnet**, die Kaffeebohnen (3) abhängig von ihrer Zusammensetzung und/oder abhängig von ihrem Röstgrad jeweils einer Gruppe (G) zugeordnet werden.

10. Kaffeeautomat (1) zum Zubereiten von Kaffeegetränken mit Kaffeebohnen (3), wobei der Kaffeeautomat (1) zumindest einen Behälter (2) zum Bevorraten von einer Sorte von Kaffeebohnen (3) aufweist, und wobei der Kaffeeautomat (1) eine Steuereinrichtung (6) aufweist, welche derart ausgestaltet ist, dass sie das Verfahren gemäß einem der Ansprüche 1 bis 9 durchführt.

11. Computerprogrammprodukt, umfassend Befehle, die bewirken, dass der Kaffeeautomat (1) gemäß Anspruch 10 die Schritte des Verfahrens gemäß einem der Ansprüche 1 bis 9 ausführt.
